# EUROPEAN PATENT APPLICATION

(11) **EP 4 572 202 A1**
(43) Date of publication of application: **18.06.2025**
(21) Application number: 22954631.2
(22) Date of filing: 12.08.2022
(51) Int. Cl.: H04L 5/00, H04W 24/00, H04W 72/12

(54) **SET DETERMINATION METHOD AND APPARATUS, AND COMMUNICATION APPARATUS AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/112240
(87) International publication number: WO 2024/031676

(57) **Abstract**

The present disclosure relates to a set determination method and apparatus, and a communication apparatus and a storage medium. The set determination method comprises: determining a cell set, to which a first cell belongs, wherein downlink control information used for scheduling multiple cells in the cell set has the same size. In the present disclosure, a terminal can determine a cell set, to which a first cell belongs, and the terminal can determine that MC-DCI for scheduling multiple cells in the cell set has the same size, such that blind detection can be performed according to the same size, thereby reducing the number of DCI sizes that need to be considered in a blind detection process, and facilitating a reduction in the complexity of blind detection.

## Description

### TECHNICAL FIELD

The present disclosure relates to the field of communication technology, and more specifically, to a set determination method, a set determination device, a communication device, and a computer-readable storage medium.

### BACKGROUND

In related art, downlink control information (DCI) is only used to schedule the data of one cell, such as scheduling physical uplink shared channel (PUSCH) and physical downlink shared channel (PDSCH) of one cell.

With the fragmentation of frequency resources, the demand for scheduling data of multiple cells at the same time is gradually increasing. In order to reduce the control message overhead, single DCI can be used to schedule the data of multiple cells. However, in the scenario where single DCI is used to schedule multiple cells, there are also some technical problems.

### SUMMARY

In view of this, the embodiments of the present disclosure propose a set determination method, a set determination device, a communication device and a computer-readable storage medium to solve the technical problems in the related art.

According to a first aspect of the embodiments of the present disclosure, there is provided a set determination method, performed by a terminal, including determining a cell set to which a first cell belongs, where sizes of downlink control information for scheduling multiple cells in the cell set are same.

According to a second aspect of the embodiments of the present disclosure, there is provided a set determination method, performed by a network device, including determining a cell set to which a first cell belongs, where sizes of downlink control information for scheduling multiple cells in the cell set are same.

According to a third aspect of the embodiments of the present disclosure, there is provided a set determination device, including a processing module configured to determine a cell set to which a first cell belongs, where sizes of downlink control information for scheduling multiple cells in the cell set are same.

According to a fourth aspect of the embodiments of the present disclosure, there is provided a set determination device, including a processing module configured to determine a cell set to which a first cell belongs, where sizes of downlink control information for scheduling multiple cells in the cell set are same.

According to a fifth aspect of the embodiments of the present disclosure, there is provided a communication device, including processor; and a memory for storing a computer program; when the computer program is executed by the processor, the set determination method performed by the terminal described above is implemented.

According to a sixth aspect of the embodiments of the present disclosure, there is provided a communication device, including a processor; and a memory for storing a computer program; when the computer program is executed by the processor, the set determination method performed by the network device described above is implemented.

According to a seventh aspect of the embodiments of the present disclosure, there is provided a computer-readable storage medium, for storing a computer program, wherein when the computer program is executed by the processor, the set determination method performed by the terminal described above is implemented.

According to an eighth aspect of the embodiments of the present disclosure, there is provided a computer-readable storage medium for storing a computer program, wherein when the computer program is executed by a processor, the set determination method performed by the network device described above is implemented.

According to embodiments of the present disclosure, the terminal can determine the cell set to which the first cell belongs. For MC-DCIs that schedule multiple cells in the same cell set, the terminal can determine that the MC-DCIs have the same size, so that blind detection is performed according to the same size, thereby reducing the number of DCI sizes that need to be considered during the blind detection process, which is conducive to reducing the complexity of the blind detection.

### BRIEF DESCRIPTION OF THE DRAWINGS

In order to more clearly illustrate the technical solutions in the embodiments of the present disclosure, the following briefly introduces the drawings required for use in the description of the embodiments. Obviously, the drawings described below are only some embodiments of the present disclosure. For those skilled in the art, other drawings can be obtained based on these drawings without creative labor.
FIG. 1 is a schematic flow chart of a set determination method according to an embodiment of the present disclosure.
FIG. 2 is a schematic flow chart of another set determination method according to an embodiment of the present disclosure.
FIG. 3 is a schematic flow chart of still another set determination method according to an embodiment of the present disclosure.
FIG. 4 is a schematic diagram of an application scenario according to an embodiment of the present disclosure.
FIG. 5 is a schematic flow chart of still another set determination method according to an embodiment of the present disclosure.
FIG. 6 is a schematic diagram of another application scenario according to an embodiment of the present disclosure.
FIG. 7 is a schematic flow chart of still another set determination method according to an embodiment of the present disclosure.
FIG. 8 is a schematic flow chart of still another set determination method according to an embodiment of the present disclosure.
FIG. 9 is a schematic diagram of still another application scenario according to an embodiment of the present disclosure.
FIG. 10 is a schematic flow chart of a set determination method according to an embodiment of the present disclosure.
FIG. 11 is a schematic flow chart of another set determination method according to an embodiment of the present disclosure.
FIG. 12 is a schematic flow chart of still another set determination method according to an embodiment of the present disclosure.
FIG. 13 is a schematic flow chart of still another set determination method according to an embodiment of the present disclosure.
FIG. 14 is a schematic flow chart of still another set determination method according to an embodiment of the present disclosure.
FIG. 15 is a schematic flow chart of still another set determination method according to an embodiment of the present disclosure.
FIG. 16 is a schematic block diagram of a set determination device according to an embodiment of the present disclosure.
FIG. 17 is a schematic block diagram of a set determination device according to an embodiment of the present disclosure.
FIG. 18 is a schematic block diagram of a device for set determination according to an embodiment of the present disclosure.
FIG. 19 is a schematic block diagram of a device for set determination according to an embodiment of the present disclosure.

### DETAILED DESCRIPTION

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in the field without making creative efforts are within the scope of protection of the present disclosure.

The terms used in the embodiments of the present disclosure are only for the purpose of describing specific embodiments, and are not intended to limit the embodiments of the present disclosure. The singular forms "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "at the time of" or "when" or "in response to determining".

For the purpose of simplicity and ease of understanding, the terms used herein to characterize the size relationship are "greater than" or "less than", "higher than" or "lower than". However, for those skilled in the art, it can be understood that: the term "greater than" also covers the meaning of "greater than or equal to", "less than" also covers the meaning of "less than or equal to"; the term "higher than" covers the meaning of "higher than or equal to", and "lower than" also covers the meaning of "lower than or equal to".

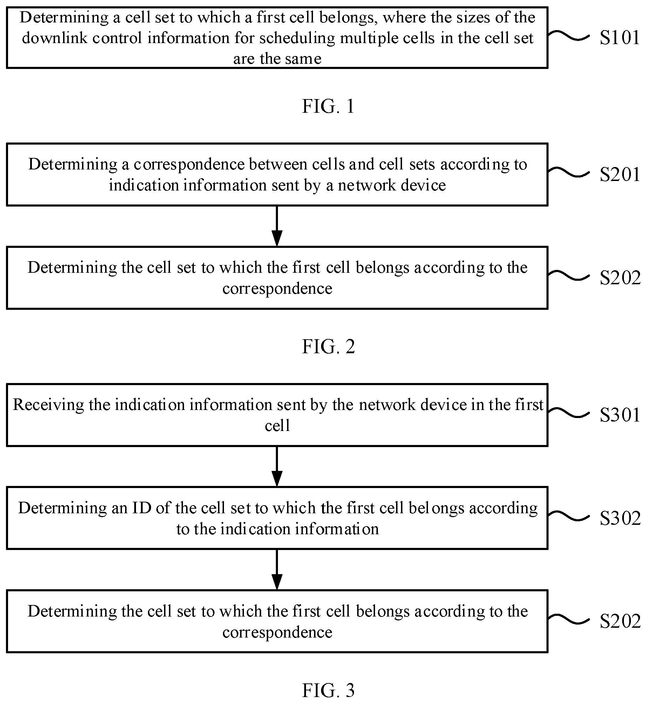

FIG. 1 is a schematic flow chart of a set determination method according to an embodiment of the present disclosure. The set determination method shown in this embodiment can be executed by a terminal, and the terminal includes but is not limited to a communication device such as a mobile phone, a tablet computer, a wearable device, a sensor, an Internet of Things device, etc. The terminal can communicate with a network device, and the network device includes but is not limited to a network device in a 4G, 5G, 6G, etc. communication system, such as a base station, a core network, etc.

As shown in FIG. 1, the set determination method may include the following steps:
In step S101, a cell set to which a first cell belongs is determined, where the sizes of the downlink control information (DCI) configured to schedule multiple cells in the cell set (specifically, schedule data of the cells, such as PUSCH and PDSCH) are the same.

In one embodiment, the DCI configured to schedule multiple cells may include DCI configured to schedule uplink data of multiple cells, such as DCI format 0_3, which may be configured to schedule uplink data of multiple cells in the cell set; and may also include DCI configured to schedule downlink data of multiple cells, such as DCI format 1_3, which may be configured to schedule downlink data of multiple cells in the cell set.

In one embodiment, the downlink control information for scheduling multiple cells may be called MC-DCI, where MC may represent multi-carrier or multi-cell. Since MC-DCI is a newly introduced DCI compared to legacy DCI, its size (size refers to the number of bits occupied) can be different from that of legacy DCI, which leads to an increase in the types of sizes. Excessive DCI sizes will increase the complexity of blind detection of DCI at the terminal.

According to the embodiment of the present disclosure, the terminal can determine the cell set to which the first cell (not a specific cell, but any serving cell) belongs. For MC-DCI of the same format for scheduling multiple cells in the same cell set, the terminal can determine that they have the same size, so as to perform blind detection according to the same size, thereby reducing the number of DCI sizes that need to be considered during the blind detection process, which is conducive to reducing the complexity of blind detection.

That is, for cells belonging to the same set, when the terminal receives MC-DCI for scheduling cells, the terminal expects to perform blind detection according to the same size for MC-DCI corresponding to the same format, or it can be described as that for cells belonging to the same set, when the terminal receives MC-DCI for scheduling cells, the terminal does not expect to perform blind detection according to different sizes for MC-DCI corresponding to the same format.

In one embodiment, different cell sets contain different cells. That is, the same cell does not belong to different cell sets, and different cell sets contain different cells.

Taking two cell sets as an example, cell set #1 contains Cell#1, Cell#2, and Cell#3, and cell set #2 contains Cell#4, Cell#5, Cell#6, and Cell#7.

Based on the embodiments of the present disclosure, for MC-DCI format 1_3 for scheduling Cell#1 and Cell#2, and MC-DCI format 1_3 for scheduling Cell#2 and Cell#3, since Cell#1, Cell#2, and Cell#3 all belong to cell set #1, when receiving MC-DCI, blind detection can be performed according to the same size.

Similarly, for MC-DCI format 1_3 for scheduling Cell#4 and Cell#5, and MC-DCI format 1_3 for scheduling Cell#5 and Cell#6, since Cell#4, Cell#5, and Cell#6 all belong to cell set #2, when receiving MC-DCI, blind detection can be performed according to the same size.

For different cell sets, the sizes of the MC-DCI for scheduling the cells in the cell sets can be the same or different, and the present disclosure does not limit this. For example, the size of the MC-DCI for scheduling multiple cells in cell set #1 and the size of the MC-DCI for scheduling multiple cells in cell set #2 may be the same or different, and may be determined according to actual conditions.

It can be seen that according to the embodiments of the present disclosure, for cells in the same cell set, no matter MC-DCI schedules which cell in the set, the terminal can blindly detect the MC-DCI according to the same size, without having to blindly detect according to different sizes each time the MC-DCI is received.

In one embodiment, the sizes of the downlink control information of the same format for scheduling multiple cells in the cell set are the same.

Taking the above cell set #1 as an example, for the DCI of the same format for scheduling multiple cells in cell set #1, the terminal can blindly detect according to the same size.

For example, the terminal receives DCI format 0_3 once for scheduling uplink data of Cell#1 and Cell#2 in cell set #1, and receives DCI format 0_3 again for scheduling uplink data of Cell#2 and Cell#3 in cell set #1. Since Cell#1, Cell#2, and Cell#3 all belong to cell set #1, for the above two received DCI format 0_3, blind detection of DCI format 0_3 can be performed according to the same size.

Accordingly, for multiple MC-DCI of the same format for scheduling multiple cells in the same cell set, the terminal can determine that they have the same size, and thus perform blind detection according to the same size, thereby reducing the number of DCI sizes that need to be considered for DCI of the same format during the blind detection process, which is beneficial to reducing the complexity of blind detection.

FIG. 2 is a schematic flow chart of another set determination method according to an embodiment of the present disclosure. As shown in FIG. 2, determining the cell set to which the first cell belongs includes:
In step S201, determining a correspondence between cells and cell sets according to indication information sent by a network device;
In step S202, determining the cell set to which the first cell belongs according to the correspondence.

In one embodiment, the correspondence between the cells and the cell sets may be indicated by the network device. For example, the network device may indicate the correspondence between the cells and the cell sets to the terminal through indication information, and then the terminal may determine the cell set to which the first cell belongs based on the correspondence between the cells and the cell sets.

It should be noted that the cell in the correspondence indicated by the network device may be selected by the network device as needed, or may be determined by the network device according to a predefined rule. For example, the cell specified by the predefined rule may be any cell, or a cell supported by the network device, or a cell supported by the terminal, or a cell currently providing services to the terminal (including a primary cell, a secondary cell, etc.), or a cell in a physical uplink control channel (PUCCH) group or a physical uplink control channel cell.

In one embodiment, the cells in the cell set belong to the same physical uplink control channel group or the same physical uplink control channel cell.

In one embodiment, the number of cells in the cell set is less than or equal to the maximum number of cells that can be scheduled by the downlink control information for scheduling multiple cells; or,
the number of cells in the cell set is greater than the maximum number, less than the maximum number, or equal to the maximum number; or,
the number of cells in the cell set is the same as the number of cells included in the physical uplink control channel group or physical uplink control channel cell corresponding to the downlink control information for scheduling multiple cells.

For example, if the number of cells in the cell set is n_{c} and the maximum number of cells that can be scheduled by MC-DCI is nₘₐₓ, n_{c} can be limited to less than nₘₐₓ; or the size of n_{c} is not limited, that is, n_{c} can be greater than nₘₐₓ, less than nₘₐₓ, or equal to nₘₐₓ; or n_{c} can be limited to be the same as the number of the cells included in the PUCCH group or PUCCH cell corresponding to MC-DCI.

In one embodiment, the maximum number is the maximum number of cells that can be scheduled by downlink control information (e.g., DCI 0_X, X can be 0, 1, 2, 3, etc.) for scheduling physical uplink shared channel (PUSCH) of multiple cells; or the maximum number is the maximum number of cells that can be scheduled by downlink control information (e.g., DCI 1_X, X can be 0, 1, 2, 3, etc.) for scheduling physical downlink shared channels (PDSCH) of multiple cells.

In one embodiment, the method further includes, when the first cell receives the downlink control information, determining that the downlink control information is configured to schedule one or more cells in the cell set to which the first cell belongs. That is, when the terminal receives MC-DCI in the first cell, if it is determined that the first cell belongs to the first cell set, then it can be determined that MC-DCI is only configured to schedule one or more cells in the first cell set. Based on this, the range of cells considered when determining the cells scheduled by MC-DCI can be reduced, which is conducive to simplifying the process of determining the cells scheduled by MC-DCI.

In one embodiment, the indication information includes, but is not limited to, a Radio Resource Control (RRC) message, a Media Access Control Control Element (MAC CE), DCI, etc. The following mainly illustrates the technical solution of the present disclosure in the case where the indication information is an RRC message.

FIG. 3 is a schematic flow chart of another set determination method according to an embodiment of the present disclosure. As shown in FIG. 3, the method of determining the correspondence between cells and cell sets according to the indication information sent by the network device includes:
In step S301, receiving the indication information sent by the network device in the first cell;
In step S302, determining an ID of the cell set to which the first cell belongs according to the indication information.

In one embodiment, the terminal can determine the ID of the set to which the first cell belongs according to the indication information received in the first cell. That is, the indication information sent by the network device to the terminal in the first cell can indicate the ID of the cell set to which the first cell belongs.

For example, if the indication information sent by the network device to the terminal in the first cell includes the ID 1 of the cell set, and the indication information sent by the network device to the terminal in the second cell includes the ID 2 of the cell set, the terminal can determine that the first cell belongs to the cell set with the ID 1, and determine that the second cell belongs to the cell set with the ID 2.

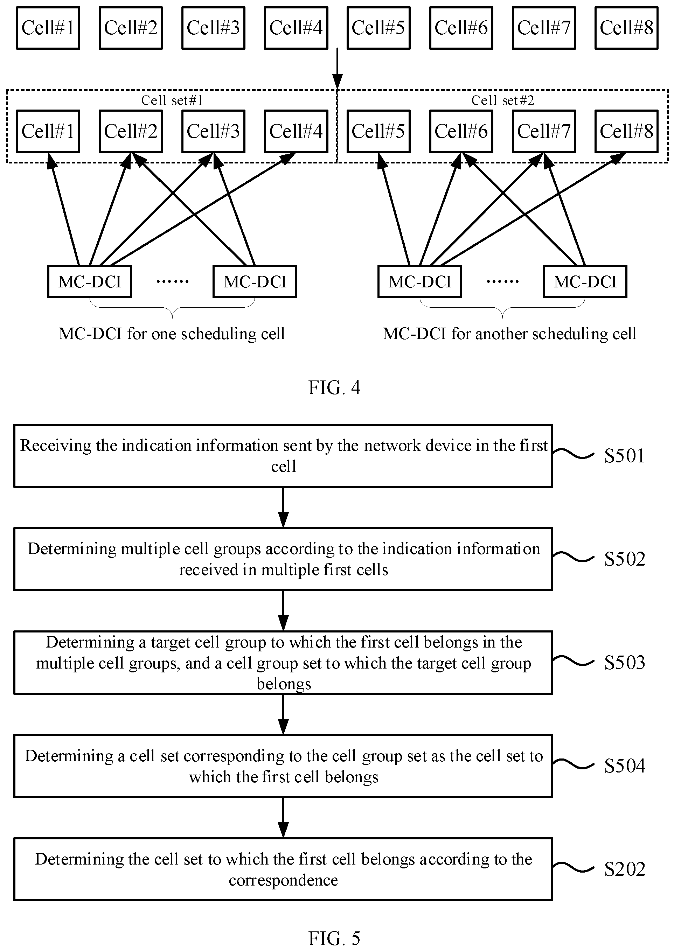

FIG. 4 is a schematic diagram of an application scenario according to an embodiment of the present disclosure.

As shown in FIG. 4, taking 8 cells as an example, they are Cell#1, Cell#2, Cell#3, Cell#4, Cell#5, Cell#6, Cell#7, and Cell#8.

The terminal receives indication information in Cell#1, Cell#2, Cell#3, and Cell#4 that includes the ID 1 of the cell set, and receives indication information in Cell#5, Cell#6, Cell#7, and Cell#8 that includes the ID 2 of the cell set. Then, the terminal can determine that Cell#1, Cell#2, Cell#3, and Cell#4 belong to the cell set with the ID 1 (cell set id=1), and determine that Cell#5, Cell#6, Cell#7, and Cell#8 belong to the cell set with the ID 2 (cell set id=2).

FIG. 5 is a schematic flow chart of another set determination method according to an embodiment of the present disclosure. As shown in FIG. 5, the method of determining the correspondence between cells and cell sets according to the indication information sent by the network device includes:
In step S501, receiving the indication information sent by the network device in the first cell;
In step S502, determining multiple cell groups according to the indication information received in multiple first cells;
In step S503, determining a target cell group to which the first cell belongs in the multiple cell groups, and a cell group set to which the target cell group belongs;
In step S504, determining a cell set corresponding to the cell group set as the cell set to which the first cell belongs.

In one embodiment, the terminal may receive the indication information sent by the network device in multiple first cells, where the indication information may indicate the association relationship between the value of the carrier indicator field (CIF) corresponding to the first cell where the indication information is received and the scheduling cell ID, and the terminal may determine multiple cell groups according to the association relationship corresponding to each first cell. The association relationship may specifically be an association relationship between the value of the carrier indication field in the scheduling cell (cif-InScheduingCell) and the scheduling cell ID.

The terminal may determine whether the first cell is a cell scheduled by the MC-DCI received in the second cell based on the following ways:
Determine the serving cell configuration (ServingCellConfig) of the information element (IE) in the RRC message, then determine the cross-carrier scheduling configuration (CrossCarrierSchedulingConfig) in the serving cell configuration, and then determine the scheduling cell information (schedulingCellInfo) in the cross-carrier scheduling configuration, and then further determine the scheduling cell ID (schedulingCellId) and cif-InScheduingCell in schedulingCellInfo when the schedulingCellInfo indication value is other.

When the scheduling cell ID configured in the RRC message is the same as the ID of the second cell, and the value of cif-InScheduingCell configured in the RRC message is the same as the value of CIF in the MC-DCI received in the second cell, it can be determined that the MC-DCI received in the second cell is configured to schedule the first cell.

The association relationship can define a correspondence between the values of multiple carrier indication fields and multiple scheduling cell IDs, and is not limited to the association of one value of the carrier indication field with one scheduling cell ID. Therefore, when the network device sends MC-DCI to the terminal according to the association relationship, it is beneficial to improve the scheduling flexibility of MC-DCI for the first cell. For example, the network device can set the CIF value in the sent MC-DCI according to the association relationship corresponding to the first cell that needs to be scheduled, thereby dynamically adjusting the multiple cells (cell group) to be scheduled.

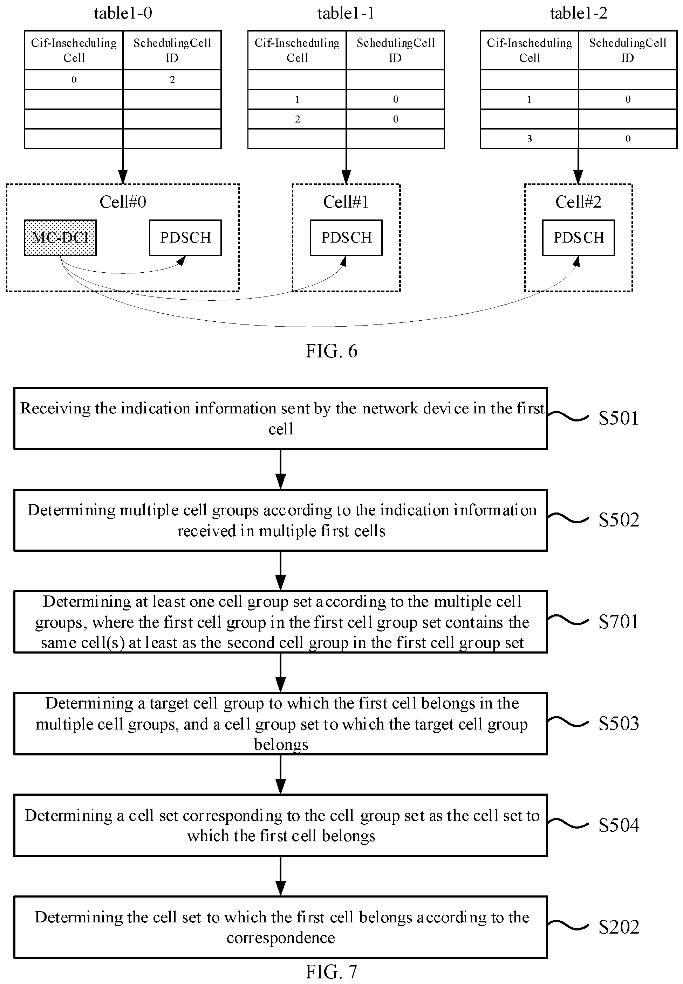

FIG. 6 is a schematic diagram of another application scenario according to an embodiment of the present disclosure.

As shown in FIG. 6, taking Cell#0 (cell ID 0), Cell#1 (cell ID 1) and Cell#2 (cell ID 2) as examples, the network device carries indication information through an RRC message.

The association relationship carried in the RRC message sent by the network device to the terminal in Cell#0 is table1-0, the association relationship carried in the RRC message sent by the network device to the terminal in Cell#1 is table1-1, and the association relationship carried in the RRC message sent by the network device to the terminal in Cell#2 is table1-2.

The association relationship contained in table 1-0 is: the value of the carrier indicator field is 0 and the corresponding scheduling cell ID is 2;
The association relationship contained in table 1-1 is: the value of the carrier indicator field is 1 and the corresponding scheduling cell ID is 0, and the value of the carrier indicator field is 2 and the corresponding scheduling cell ID is 0. Then, when the value of CIF in the MC-DCI sent by the network device to the terminal in the second cell with the cell ID 0 is 1, the first cell (for example, Cell#1) can be scheduled, and when the value of CIF in the MC-DCI sent by the network device to the terminal in the second cell with the cell ID 0 is 2, the first cell (for example, Cell#1) can also be scheduled. The value of CIF can range from 0 to 7, and of course, it can also be adjusted as needed.

The association relationship contained in table 1-2 is: the value of the carrier indicator field is 1 and the corresponding scheduling cell ID is 0, and the value of the carrier indicator field is 3 and the corresponding scheduling cell ID is 0. Then, when the value of CIF in the MC-DCI sent by the network device to the terminal in the second cell with the cell ID of 0 is 1, the first cell (e.g., Cell#2) can be scheduled. When the value of CIF in the MC-DCI sent by the network device to the terminal in the second cell with the cell ID of 2 is 3, the first cell (e.g., Cell#2) can also be scheduled.

Since table 1-0 is the association relationship received in the scheduling cell Cell#0, and the MC-DCI received in the scheduling cell can be used for self-scheduling, that is, the MC-DCI received in Cell#0 can be configured to schedule Cell#0 itself, the association relationship corresponding to Cell#0 can also include, in addition to the corresponding relationship contained in table 1-0, the following additional association relationships: the value 0 of the carrier indication field corresponding to the scheduling cell ID of 0, the value 1 of the carrier indication field corresponding to the scheduling cell ID of 0, the value 2 of the carrier indication field corresponding to the scheduling cell ID of 0, and the value 3 of the carrier indication field corresponding to the scheduling cell ID of 0.

It should be noted that the blank part of the table shown in FIG. 6 can also be used to set the value of the carrier indication field and the scheduling cell ID, but this is not used in the example process of the present embodiment and is therefore not shown. In addition, the number of rows in the table is not limited to 4 rows shown in the figure, and the number of rows can be reduced or increased as needed.

Based on the above association relationship, it can be determined that when the value of the carrier indication field is 0 (00), MC-DCI can schedule Cell#0; when the value of the carrier indication field is 1 (01), MC-DCI can schedule Cell#0, Cell#1, and Cell#2; when the value of the carrier indication field is 2 (10), MC-DCI can schedule Cell#0 and Cell#1; when the value of the carrier indication field is 3 (11), MC-DCI can schedule Cell#0 and Cell#2. Based on this, the relationship between the value of the carrier indication field and the scheduled cell that can be determined by the terminal is shown in Table 1 below:

**Table 1**

| CIF | Cell group |
|---|---|
| 00 | {0} |
| 01 | {0,1,2} |
| 10 | {0,1} |
| 11 | {0,2} |

The cell group may be a cell group respectively constituted by the cells corresponding to the value of each carrier indication field in the association relationship indicated by the indication information received by each first cell. As shown in Table 1, the multiple cell groups are {0}, {0,1,2}, {0,1}, {0,2}.

It can be understood that each element in the table shown in all embodiments of the present disclosure exists independently. These elements are exemplarily listed in the same table, but it does not mean that all elements in the table must exist at the same time as shown in the table. The value of each element is independent of any other element value in the table. Therefore, those skilled in the art can understand that the value of each element in the table is an independent embodiment.

Since the cell group also has a cell group set to which it belongs, and the cell group set can correspond to a cell set, after determining multiple cell groups, the terminal can further determine the target cell group to which the first cell belongs in the multiple cell groups, and then determine the cell group set to which the target cell group belongs, and the cell set corresponding to the cell group set, so that it can be determined that the first cell belongs to the determined cell set.

The cells included in the cell groups in different cell group sets are different. For example, cell group set #1 includes cell group #1 and cell group #2, and cell group set #2 includes cell group #3 and cell group #4. Then, the cells included in cell group #1 and cell group #2 are different from the cells included in cell group #3 and cell group #4.

FIG. 7 is a schematic flow chart of another set determination method according to an embodiment of the present disclosure. As shown in FIG. 7, the method further includes:

In step S701, determining at least one cell group set according to the multiple cell groups, where the first cell group in the first cell group set contains the same cell(s) at least as the second cell group in the first cell group set.

In one embodiment, after determining multiple cell groups, the terminal may determine a cell group set according to the multiple cell groups, where the cell groups containing the same cell(s) may be divided into the same cell group set. For example, if the first cell group and the second cell group contain the same cell(s), then the first cell group and the second cell group may be divided into the same cell group set, for example, divided into the first cell group set.

Then, a cell group containing the same cell(s) as any cell group in the first cell group set can be determined from other cell groups, and then the determined cell group can also be divided into the first cell group set. In this manner, the determination of the first cell group set can be completed. Then, according to the method of determining the first cell group set, other cell group sets can be determined.

It should be noted that the first cell group and the second cell group in the same cell group set are different. The first cell group and the second cell group do not refer to a specific cell, but to any cell group in a cell group set.

For example, the following cell groups are used as examples to determine the cell group set:
{0,1,2,3},{3},{5,6,7},{3,4,5,6},{8,9},{8};
First, any one of the cell groups can be considered. For example, the cell group {0,1,2,3} can be considered first. It can be determined that the cell group {3} and the cell group {3,4,5,6} contain the same cell Cell#3 as the cell group {0,1,2,3}. Then, the three cell groups {3}, {3,4,5,6}, and {0,1,2,3} can be divided into the same cell group set, for example, called the first cell group set.

Then, in other cell groups, the cell groups that contain the same cell(s) as any of the cell groups in the first cell group set can be determined. It can be determined that the cell group {5,6,7} contains the same cells Cell#5 and Cell#6 as the cell group {3,4,5,6} in the first cell group. Therefore, the cell group {5,6,7} can also be divided into the first cell group set.

However, the cell groups {8,9} and {8} do not contain the same cell(s) as any of the cell groups in the first cell group set. Therefore, the first cell group set has been determined, and the determination of the second cell group set may continue. For example, according to the above method, it can be determined that the second cell group set contains the cell groups {8,9} and {8}.

For the cell group, in the case of the embodiment shown in FIG. 4, for example, the indication information received in Cell#1, Cell#2, Cell#3, and Cell#4 includes the cell set ID 1, and the indication information received in Cell#5, Cell#6, Cell#7, and Cell#8 includes the cell set ID 2. The terminal determines that Cell#1, Cell#2, Cell#3, and Cell#4 belong to the cell set ID 1 (cell set id=1), and determines that Cell#5, Cell#6, Cell#7, and Cell#8 belong to the cell set ID 2 (cell set id=2).

The MC-DCI received subsequently by the terminal in the scheduling cell is configured to schedule multiple cells Cell#1, Cell#2, Cell#3, and Cell#4, and can also be configured to schedule multiple cells Cell#2 and Cell#3. Another MC-DCI received in the scheduling cell can be configured to schedule multiple cells Cell#5, Cell#6, Cell#7, and Cell#8, and can also be configured to schedule multiple cells Cell#6 and Cell#7. Then, four cell groups {1,2,3,4}, {2,3}, {5,6,7,8}, and {6,7}, as well as two cell group sets {{1,2,3,4}, {2,3}} and {{5,6,7,8}, {6,7}} can be determined. Different cell group sets can be determined by the cells scheduled by the MC-DCI sent in different cells.

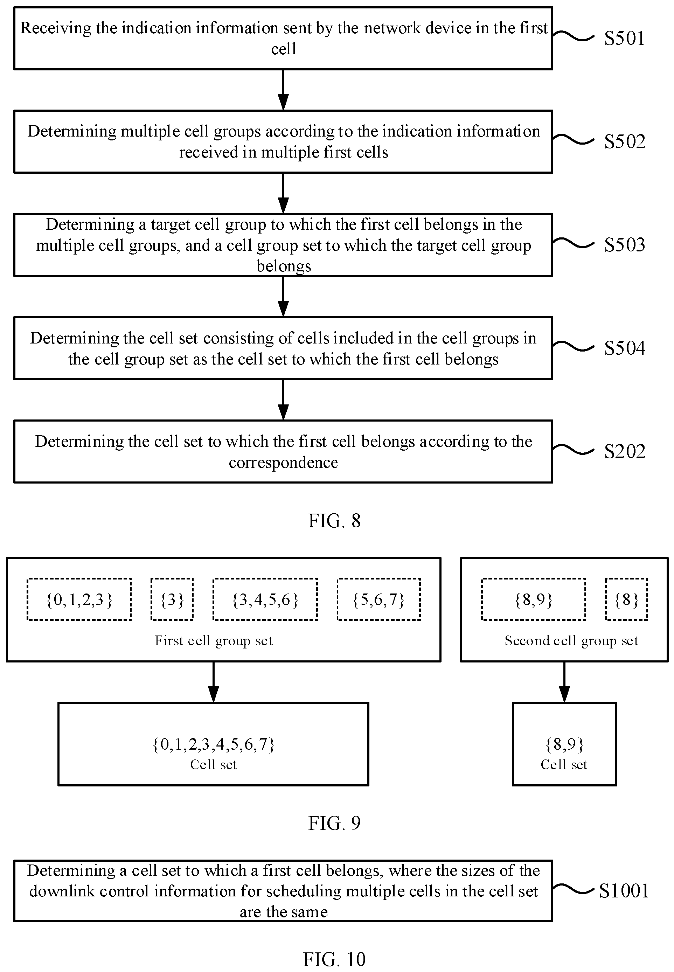

FIG. 8 is a schematic flow chart of another set determination method according to an embodiment of the present disclosure. As shown in FIG. 8, determining the cell set corresponding to the cell group set includes:
In step S801, determining the cell set consisting of cells included in the cell groups in the cell group set.

In one embodiment, the method of determining the cell set corresponding to the cell group set may be determining the cells included in the cell group in the cell group set, and then using the set consisting of the determined cells as the cell set corresponding to the cell group set.

FIG. 9 is a schematic diagram of another application scenario according to an embodiment of the present disclosure.

Taking the first cell group set and the second cell group set determined in the above embodiment as an example, the first cell group set is {{0,1,2,3},{3},{3,4,5,6},{5,6,7}}, and the second cell group set is {{8,9},{8}}.

Then according to this embodiment, it can be determined that the cells included in the cell group in the first cell group set are Cell#0, Cell#1, Cell#2, Cell#3, Cell#4, Cell#5, Cell#6, and Cell#7. Then it can be determined that the cell set formed by these cells is {0,1,2,3,4,5,6,7}, that is, the cell set corresponding to the first cell group set is {0,1,2,3,4,5,6,7}. Similarly, it can be determined that the cell set corresponding to the second cell group set is {8,9}.

The above embodiments mainly consider that the sizes of the DCI configured to schedule multiple cells in the cell set are the same. In fact, the embodiments of the present disclosure can also be applied to scheduling cell groups, that is, the sizes of the DCI configured to schedule multiple cell groups in the cell group set are the same.

The present disclosure also proposes a set determination method, which is executed by a terminal, the method including determining a first cell group to which a first cell belongs; determining a first cell group set to which the first cell group belongs, where the sizes of downlink control information configured to schedule multiple cell groups in the first cell group set are the same.

According to an embodiment of the present disclosure, the terminal can determine the first cell group set to which the first cell group (not specifically referring to a certain cell group, but can be a cell group composed of any serving cells) belongs. For multiple MC-DCI for scheduling multiple cell groups in the same cell group set, the terminal can determine that they have the same size, so as to perform blind detection according to the same size, thereby reducing the number of DCI sizes that need to be considered during the blind detection process, which is conducive to reducing the complexity of the blind detection.

In one embodiment, different cell group sets contain different cell groups. That is, the same cell group will not belong to different cell group sets, and different cell group sets contain different cell groups.

In one embodiment, the sizes of downlink control information of the same format configured to schedule multiple cell groups in the first cell group set are the same. That is, for multiple MC-DCI of the same format for scheduling multiple cell groups in the same cell group set, the terminal can determine that they have the same size, so as to perform blind detection according to the same size, thereby reducing the number of DCI sizes that need to be considered for multiple DCI of the same format during the blind detection process, which is conducive to reducing the complexity of blind detection.

In one embodiment, the method also includes:
receiving indication information sent by a network device in a first cell;
determining multiple cell groups and a first cell set to which the first cell belongs according to the indication information;
determining the first cell group set according to the cell groups including the cells in the first cell set among the multiple cell groups.

In one embodiment, the terminal can receive indication information sent by the network device in multiple first cells, where the indication information can indicate the association relationship between the value of the carrier indication field corresponding to the first cell where the indication information is received and the scheduling cell ID, and the terminal can determine multiple cell groups according to the association relationship corresponding to each first cell. The association relationship can specifically be the association relationship between the value of cif-InScheduingCell and the scheduling cell ID.

Regarding the method of determining multiple cell groups according to the indication information, it is similar to the embodiment described above and will not be described in detail here. Regarding determining the first cell set to which the first cell belongs according to the indication information, the ID of the cell set to which the first cell belongs can be determined according to the indication information, and then the first cell can be determined to belong to the cell set corresponding to the ID. The specific example method is also described in the embodiment described above and will not be described in detail here. Here, the main description is how to determine the first cell ground set.

For example, based on the embodiment shown above, the cell group includes:
{0,1,2,3},{3},{5,6,7},{3,4,5,6},{8,9},{8},
For example, if the indication information includes the cell set ID 1, then it can be determined that the first cell belongs to the cell set with ID 1. For example, the first cell set with ID 1 is {0,1,2,3,4,5,6,7}.

The cell group including the cell in the first cell set {0,1,2,3,4,5,6,7} among the multiple cell groups can be determined. Four cell groups {0,1,2,3}, {3}, {5,6,7}, and {3,4,5,6} in the multiple cell groups include cells in the first cell set, and these cell groups including cells in the first cell set {0,1,2,3,4,5,6,7} can be divided into a cell group set, that is, {{0,1,2,3}, {3}, {3,4,5,6}, {5,6,7}}.

For example, if the indication information includes the cell set ID 2, it can be determined that the first cell belongs to the cell set with ID 2, for example, the first cell set with ID 2 is {8,9}.

It is then possible to determine a cell group including cell(s) in the first cell set {8,9} among the multiple cell groups, and two cell groups {8,9} and {8} among the multiple cell groups include cell(s) in the first cell set {8,9}. It is then possible to divide these cell groups including cell(s) in the first cell set {8,9} into a cell group set, namely {{8,9},{8}}.

FIG. 10 is a schematic flow chart of a set determination method according to an embodiment of the present disclosure. The set determination method shown in this embodiment may be executed by a network device, and the network device may communicate with a terminal. The network device includes, but is not limited to, a base station in a communication system such as a 4G base station, a 5G base station, and a 6G base station. The terminal includes, but is not limited to, a communication device such as a mobile phone, a tablet computer, a wearable device, a sensor, and an Internet of Things device.

As shown in FIG. 10, the set determination method may include the following steps:

In step S1001, determining a cell set to which a first cell belongs, where the sizes of the downlink control information for scheduling multiple cells in the cell set are the same.

In one embodiment, the DCI for scheduling multiple cells may include DCI for scheduling uplink data of multiple cells, for example, DCI format 0_3, which can be configured to schedule uplink data of multiple cells in the cell set; and may also include DCI for scheduling downlink data of multiple cells, for example, DCI format 1_3, which can be configured to schedule downlink data of multiple cells in the cell set.

In one embodiment, the downlink control information for scheduling multiple cells may be called MC-DCI, where MC may represent multi-carrier or multi-cell. Since MC-DCI is a newly introduced DCI compared to legacy DCI, its size (size refers to the number of bits occupied) can be different from that of legacy DCI, which leads to an increase in the types of sizes, and excessive DCI sizes will increase the complexity of blind detection of DCI at the terminal.

According to an embodiment of the present disclosure, the network device may determine the cell set to which the first cell (not a specific cell, but any serving cell) belongs. For MC-DCI of a format for scheduling multiple cells in the same cell set, the network device may set the same size, so that the terminal performs blind detection according to the same size for MC-DCI for scheduling multiple cells in the same cell set, thereby reducing the number of DCI sizes that need to be considered during the blind detection process, which is conducive to reducing the complexity of blind detection.

That is, for cells belonging to the same set, when the network device sends MC-DCI to schedule multiple cells, the same size may be set for MC-DCI corresponding to the same format sent each time. Therefore, for cells belonging to the same set, when the terminal receives MC-DCI for scheduling cells, the terminal expects to perform blind detection according to the same size for MC-DCI corresponding to the same format, or it can be described as that for cells belonging to the same set, when the terminal receives MC-DCI for scheduling cells, the terminal does not expect to perform blind detection according to different sizes for MC-DCI corresponding to the same format.

In one embodiment, different cell sets contain different cells. That is, the same cell does not belong to different cell sets, and different cell sets contain different cells.

Taking two cell sets as an example, cell set #1 contains Cell#1, Cell#2, and Cell#3, and cell set #2 contains Cell#4, Cell#5, Cell#6, and Cell#7.

Based on the embodiments of the present disclosure, for MC-DCI format 1_3 for scheduling Cell#1 and Cell#2, and MC-DCI format 1_3 for scheduling Cell#2 and Cell#3, since Cell#1, Cell#2, and Cell#3 all belong to cell set #1, when sending MC-DCI, the same size can be set,

Similarly, for MC-DCI format 1_3 for scheduling Cell#4 and Cell#5, and MC-DCI format 1_3 for scheduling Cell#5 and Cell#6, since Cell#4, Cell#5, and Cell#6 all belong to cell set #2, when sending MC-DCI, the same size can be set.

For different cell sets, the sizes of the MC-DCI for scheduling the cells in the cell sets can be the same or different, and the present disclosure does not limit this. For example, the size of the MC-DCI for scheduling multiple cells in cell set #1 and the size of the MC-DCI for scheduling multiple cells in cell set #2 may be the same or different, and may be determined according to actual conditions.

It can be seen that according to the embodiments of the present disclosure, for cells in the same cell set, no matter MC-DCI schedules which cell in the set, the network device can set the size of the MC-DCI to be the same, so that the terminal can blindly detect the MC-DCI according to the same size, without having to blindly detect according to different sizes each time the MC-DCI is received.

In one embodiment, the sizes of the downlink control information of the same format for scheduling multiple cells in the cell set are the same.

Taking the above cell set #1 as an example, for the DCI of the same format for scheduling multiple cells in cell set #1, the terminal can perform blind detection according to the same size.

For example, the network device sends DCI format 0_3 once for scheduling uplink data of Cell#1 and Cell#2 in cell set #1, and sends DCI format 0_3 again for scheduling uplink data of Cell#2 and Cell#3 in cell set #1. Since Cell#1, Cell#2, and Cell#3 all belong to cell set #1, the same size can be set for the DCI format 0_3 sent twice, so that the terminal can blindly detect DCI format 0_3 according to the same size.

Accordingly, for multiple MC-DCI of the same format for scheduling multiple cells in the same cell set, the network device can set the same size, so that the terminal can perform blind detection according to the same size, thereby reducing the number of DCI sizes that need to be considered for DCI of the same format during the blind detection process, which is conducive to reducing the complexity of blind detection.

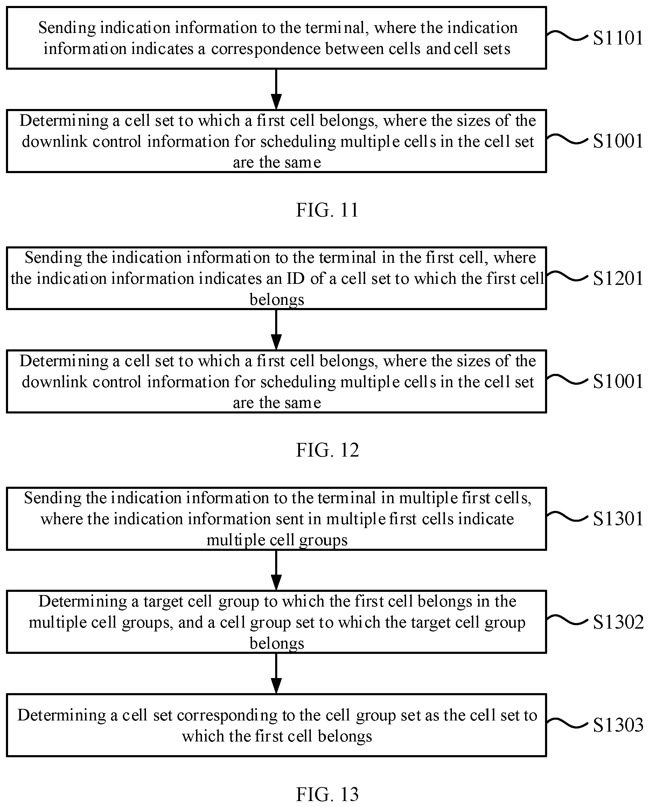

FIG. 11 is a schematic flow chart of another set determination method according to an embodiment of the present disclosure. As shown in FIG. 11, the method further includes:

In step S1101, sending indication information to the terminal, where the indication information indicates a correspondence between cells and cell sets.

In one embodiment, the correspondence between cells and cell sets may be indicated by the network device. For example, the network device may indicate the correspondence between the cells and the cell sets to the terminal through indication information, and then the terminal may determine the cell set to which the first cell belongs based on the correspondence between the cells and the cell sets.

It should be noted that the cell in the correspondence indicated by the network device may be selected by the network device as required, or may be determined by the network device according to a predefined rule. For example, the cell specified by the predefined rule may be any cell, or a cell supported by the network device, or a cell supported by the terminal, or a cell currently providing services to the terminal (including a primary cell, a secondary cell, etc.), or a cell in a physical uplink control channel group (PUCCH group) or a physical uplink control channel cell (PUCCH Cell).

In one embodiment, the cells in the cell set belong to the same physical uplink control channel group or the same physical uplink control channel cell.

In one embodiment, the number of cells in the cell set is less than or equal to the maximum number of cells that can be scheduled by the downlink control information for scheduling multiple cells; or,

the number of cells in the cell set is greater than the maximum number, less than the maximum number, or equal to the maximum number; or,

the number of cells in the cell set is the same as the number of cells included in the physical uplink control channel group or physical uplink control channel cell corresponding to the downlink control information for scheduling multiple cells.

For example, if the number of cells in the cell set is n_{c} and the maximum number of cells that can be scheduled by MC-DCI is nₘₐₓ, n_{c} can be limited to less than nₘₐₓ; or the size of n_{c} is not limited, that is, n_{c} can be greater than nₘₐₓ, less than nₘₐₓ, or equal to nₘₐₓ; or n_{c} can be limited to be the same as the number of the cells included in the PUCCH group or PUCCH cell corresponding to MC-DCI.

In one embodiment, the maximum number is the maximum number of cells that can be scheduled by downlink control information (e.g., DCI 0_X, where X can be 0, 1, 2, 3, etc.) for scheduling physical uplink shared channels PUSCH of multiple cells; or, the maximum number is the maximum number of cells that can be scheduled by downlink control information (e.g., DCI 1_X, where X can be 0, 1, 2, 3, etc.) for scheduling physical downlink shared channels PDSCH of multiple cells.

In one embodiment, the method further includes sending downlink control information to the terminal in the first cell, where the downlink control information is configured to schedule one or more cells in the cell set to which the first cell belongs.

That is, when the network device sends MC-DCI to the terminal in the first cell, if it is determined that the first cell belongs to the first cell set, then the MC-DCI sent is only configured to schedule one or more cells in the first cell set. Accordingly, the range of cells considered when determining the cells scheduled by the MC-DCI can be reduced, which is conducive to simplifying the process of determining the cells scheduled by the MC-DCI.

In one embodiment, the indication information includes, but is not limited to, a radio resource control RRC message, a media access control layer control unit MAC CE, DCI, etc. The following mainly illustrates the technical solution of the present disclosure in the case where the indication information is an RRC message.

FIG. 12 is a schematic flow chart of another set determination method according to an embodiment of the present disclosure. As shown in FIG. 12, sending the indication information to the terminal includes:

In step S1201, sending the indication information to the terminal in the first cell, where the indication information indicates an ID of a cell set to which the first cell belongs.

In one embodiment, the network device may send indication information to the terminal in the first cell to indicate the ID of the cell set to which the first cell belongs.

For example, the indication information sent by the network device to the terminal in the first cell includes the ID 1 of the cell set, and the indication information sent by the network device to the terminal in the second cell includes the ID 2 of the cell set, which may indicate that the first cell belongs to the cell set with the ID 1, and indicate that the second cell belongs to the cell set with the ID 2.

FIG. 13 is a schematic flow chart of another set determination method according to an embodiment of the present disclosure. As shown in FIG. 13, sending the indication information to the terminal includes:

In step S1301, sending the indication information to the terminal in multiple first cells, where the indication information sent in multiple first cells indicate multiple cell groups,
determining the cell set to which the first cell belongs includes:
In step S1302, determining a target cell group to which the first cell belongs in the multiple cell groups, and a cell group set to which the target cell group belongs;
In step S1303, determining a cell set corresponding to the cell group set as the cell set to which the first cell belongs.

In one embodiment, the network device may send indication information to the terminal in multiple first cells, where the indication information may indicate the association relationship between the value of the carrier indication field CIF corresponding to the first cell where the indication information is sent and the scheduling cell ID, and the network device may determine multiple cell groups according to the association relationship corresponding to each first cell. The association relationship may specifically be an association relationship between the value of the carrier indication field in the scheduling cell (cif-InScheduingCell) and the scheduling cell ID.

The role of the association relationship has been described in the above embodiment corresponding to terminal side, and will not be repeated here. The way in which the network device determines multiple cell groups is opposite to the way in which the terminal determines multiple cells. The network device can determine multiple cell groups before sending the indication information and indicate them to the terminal through the indication information, while the terminal can determine multiple cells only after receiving the indication information, which will not be repeated here.

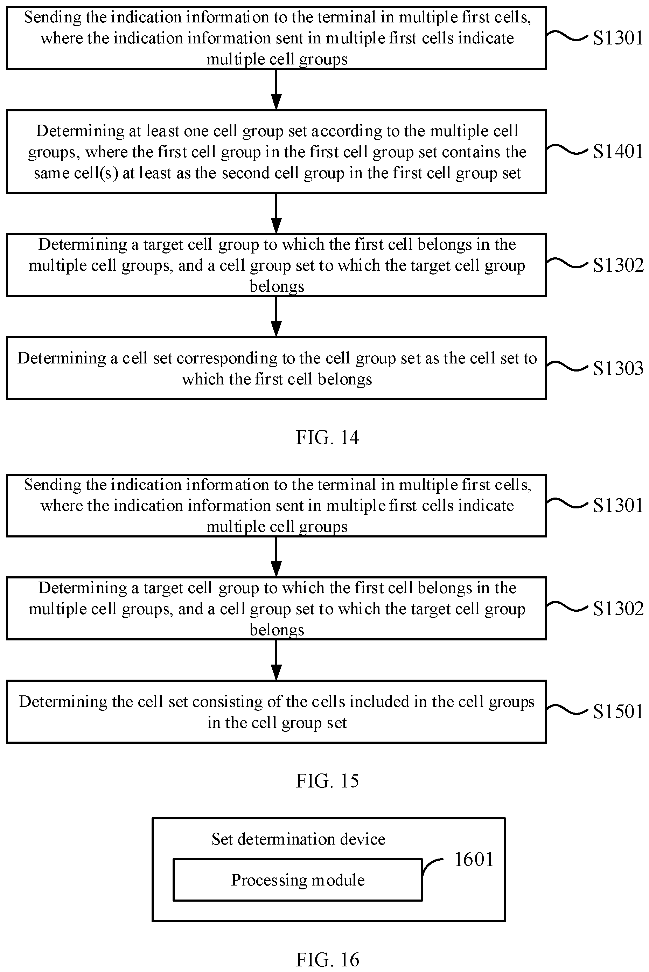

FIG. 14 is a schematic flow chart of another set determination method according to an embodiment of the present disclosure. As shown in FIG. 14, the method further includes:

In step S1401, determining at least one cell group set according to the multiple cell groups, where the first cell group in the first cell group set contains the same cell(s) at least as the second cell group in the first cell group set.

In one embodiment, in a case where the network device indicates multiple cell groups through indication information, the cell group set can be determined based on the multiple cell groups, where the cell groups containing the same cell(s) can be divided into the same cell group set. For example, if the first cell group and the second cell group contain the same cell(s), then the first cell group and the second cell group can be divided into the same cell group set, for example, into the first cell group set.

Then, a cell group containing the same cell(s) as any cell group in the first cell group set can be determined in other cell groups, and then the determined cell group can also be divided into the first cell group set. In this manner, the determination of the first cell group set can be completed. Then, according to the method of determining the first cell group set, other cell group sets are determined.

It should be noted that the first cell group and the second cell group in the same cell group set are different. The first cell group and the second cell group do not refer to a specific cell, but to any cell group in a cell group set.

For example, the cell group set is determined by taking the following cell groups as examples:
{0,1,2,3}, {3}, {5,6,7}, {3,4,5,6}, {8,9}, {8};

First, any one of the cell groups can be considered. For example, the cell group {0,1,2,3} can be considered first. It can be determined that the cell group {3} and the cell group {3,4,5,6} contain the same cell Cell#3 as the cell group {0,1,2,3}. Then, the three cell groups {3}, {3,4,5,6}, and {0,1,2,3} can be divided into the same cell group set, for example, called the first cell group set.

Then, in other cell groups, the cell groups that contain the same cell(s) as any of the cell groups in the first cell group set can be determined. It can be determined that the cell group {5,6,7} contains the same cells Cell#5 and Cell#6 as the cell group {3,4,5,6} in the first cell group. Then, the cell group {5,6,7} can also be classified into the first cell group set.

However, the cell groups {8,9} and {8} do not contain the same cell(s) as any of the cell groups in the first cell group set. Therefore, the first cell group set has been determined, and the determination of the second cell group set may continue. For example, according to the above method, it can be determined that the second cell group set contains the cell groups {8,9} and {8}.

For the cell group, in the case of the embodiment shown in FIG. 4, for example, the network device determines that Cell#1, Cell#2, Cell#3, and Cell#4 belong to a cell set with ID 1 (cell set id=1), and determines that Cell#5, Cell#6, Cell#7, and Cell#8 belong to a cell set with ID 2 (cell set id=2). Then, the indication information sent in Cell#1, Cell#2, Cell#3, and Cell#4 includes the cell set ID 1, and the indication information sent in Cell#5, Cell#6, Cell#7, and Cell#8 includes the cell set ID 2.

Subsequently, the network device can send MC-DCI to the terminal in the scheduling cell for scheduling multiple cells Cell#1, Cell#2, Cell#3, Cell#4, and can also for scheduling multiple cells Cell#2 and Cell#3. Another MC-DCI sent in the scheduling cell can be configured to schedule multiple cells Cell#5, Cell#6, Cell#7, Cell#8, and can also be configured to schedule multiple cells Cell#6 and Cell#7. Then, four cell groups {1,2,3,4}, {2,3}, {5,6,7,8}, {6,7}, as well as two cell group sets {{1,2,3,4}, {2,3}} and {{5,6,7,8}, {6,7}} can be determined. Different cell group sets can be determined by cells scheduled by MC-DCI sent in different cells.

FIG. 15 is a schematic flow chart of another set determination method according to an embodiment of the present disclosure. As shown in FIG. 15, determining the cell set corresponding to the cell group set includes:

In step S1501, determining the cell set consisting of the cells included in the cell groups in the cell group set.

In one embodiment, the method of determining the cell set corresponding to the cell group set may be determining the cells included in the cell groups in the cell group set, and then using the set consisting of the determined cells as the cell set corresponding to the cell group set.

Taking the first cell group set and the second cell group set determined in the above embodiment as an example, the first cell group set is {{0,1,2,3},{3},{3,4,5,6},{5,6,7}}, and the second cell group set is {{8,9},{8}}.

Then according to this embodiment, it can be determined that the cells included in the cell group in the first cell group set are Cell#0, Cell#1, Cell#2, Cell#3, Cell#4, Cell#5, Cell#6, and Cell#7. Then it can be determined that the cell set formed by these cells is {0,1,2,3,4,5,6,7}, that is, the cell set corresponding to the first cell group set is {0,1,2,3,4,5,6,7}. Similarly, it can be determined that the cell set corresponding to the second cell group set is {8,9}.

The present disclosure also proposes a set determination method, which is executed by a network device, the method including determining a first cell group to which a first cell belongs; determining a first cell group set to which the first cell group belongs, where the sizes of the downlink control information configured to schedule multiple cell groups in the first cell group set are the same.

According to an embodiment of the present disclosure, the network device may determine the first cell group set to which a first cell group (not specifically referring to a certain cell group, but can be a cell group composed of any serving cells) belongs. For MC-DCIs for scheduling multiple cell groups in the same cell group set, the network may set the same size, and the terminal may perform blind detection according to the same size, thereby reducing the number of DCI sizes that need to be considered during the blind detection process, which is conducive to reducing the complexity of blind detection.

In one embodiment, different cell group sets contain different cell groups. That is, the same cell group does not belong to different cell group sets, and different cell group sets contain different cell groups.

In one embodiment, the sizes of downlink control information of the same format configured to schedule multiple cell groups in the first cell group set are the same. That is, for multiple MC-DCI of the same format for scheduling multiple cell groups in the same cell group set, the terminal may determine that they have the same size, and thus perform blind detection according to the same size, thereby reducing the number of DCI sizes that need to be considered for multiple DCI of the same format during the blind detection process, which is conducive to reducing the complexity of blind detection.

In one embodiment, the method further includes:
receiving indication information sent to the terminal in the first cell, where the indication information indicates multiple cell groups and a first cell set to which the first cell belongs;
determining the first cell group set according to the cell groups including the cells in the first cell set among the multiple cell groups.

In one embodiment, the network device may send indication information to the terminal in multiple first cells, where the indication information may indicate the association relationship between the value of the carrier indication field corresponding to the first cell where the indication information is received and the scheduling cell ID, and the terminal may determine multiple cell groups according to the association relationship corresponding to each first cell. The association relationship may specifically be an association relationship between the value of cif-InScheduingCell and the scheduling cell ID.

The method of determining multiple cell groups according to the indication information is similar to the above-mentioned embodiment and will not be described in detail here. Regarding determining the first cell set to which the first cell belongs according to the indication information, the ID of the cell set to which the first cell belongs can be determined according to the indication information, and then the first cell can be determined to belong to the cell set corresponding to the ID. The specific example method is also described in the above-mentioned embodiment and will not be described in detail here. Here, the main description is how to determine the first cell group set.

For example, based on the embodiment shown above, the cell group includes:
{0,1,2,3},{3},{5,6,7},{3,4,5,6},{8,9},{8};

For example, if the indication information includes the cell set ID 1, then it can be determined that the first cell belongs to the cell set with ID 1. For example, the first cell set with ID 1 is {0,1,2,3,4,5,6,7}.

The cell group including the cell in the first cell set {0,1,2,3,4,5,6,7} among the multiple cell groups can be determined. Four cell groups {0,1,2,3}, {3}, {5,6,7}, and {3,4,5,6} in the multiple cell groups include cells in the first cell set, and these cell groups including cells in the first cell set {0,1,2,3,4,5,6,7} can be divided into a cell group set, that is, {{0,1,2,3}, {3}, {3,4,5,6}, {5,6,7}}.

For example, if the indication information includes the cell set ID 2, it can be determined that the first cell belongs to the cell set with ID 2, for example, the first cell set with ID 2 is {8,9}.

It is then possible to determine a cell group including cell(s) in the first cell set {8,9} among the multiple cell groups, and two cell groups {8,9} and {8} among the multiple cell groups include cell(s) in the first cell set {8,9}. It is then possible to divide these cell groups including cell(s) in the first cell set {8,9} into a cell group set, namely {{8,9},{8}}.

Corresponding to the aforementioned embodiment of the set determination method, the present disclosure also provides an embodiment of a set determination device.

FIG. 16 is a schematic block diagram of a set determination device according to an embodiment of the present disclosure. The set determination device shown in this embodiment may be a terminal, or a device composed of modules in a terminal. The terminal includes, but is not limited to, a communication device such as a mobile phone, a tablet computer, a wearable device, a sensor, an Internet of Things device, etc. The terminal may communicate with a network device, and the network device includes, but is not limited to, a network device in a 4G, 5G, 6G, etc. communication system, such as a base station, a core network, etc.

As shown in FIG. 16, the set determination device includes:
a processing module 1601, configured to determine a cell set to which a first cell belongs, where the sizes of the downlink control information for scheduling multiple cells in the cell set are the same.

In one embodiment, the sizes of the downlink control information of the same format for scheduling multiple cells in the cell set are the same.

In one embodiment, different cell sets contain different cells.

In one embodiment, the processing module determines the correspondence between cells and cell sets according to the indication information sent by the network device; and determines the cell set to which the first cell belongs according to the correspondence.

In one embodiment, the processing module receives the indication information sent by the network device in the first cell; and determines the ID of the cell set to which the first cell belongs according to the indication information.

In one embodiment, the processing module receives indication information sent by a network device in the first cell; determines multiple cell groups according to the indication information received in multiple first cells; determines a target cell group to which the first cell belongs in the multiple cell groups, and a cell group set to which the target cell group belongs; and determines a cell set corresponding to the cell group set as the cell set to which the first cell belongs.

In one embodiment, the processing module is further configured to determine at least one cell group set according to the multiple cell groups, where the first cell group in the first cell group set contains the same cell(s) at least as the second cell group in the first cell group set.

In one embodiment, the processing module determines a cell set consisting of cells contained in the cell groups in the cell group set.

In one embodiment, the processing module is further configured to determine, when the downlink control information is received in the first cell, that the downlink control information is configured to schedule one or more cells in the cell set to which the first cell belongs.

In one embodiment, the cells in the cell set belong to the same physical uplink control channel group or the same physical uplink control channel cell.

In one embodiment, the number of cells in the cell set is less than or equal to the maximum number of cells that can be scheduled by the downlink control information for scheduling multiple cells; or, the number of cells in the cell set is greater than the maximum number, or less than the maximum number, or equal to the maximum number; or, the number of cells in the cell set is the same as the number of cells included in the physical uplink control channel group or physical uplink control channel cell corresponding to the downlink control information for scheduling multiple cells.

In one embodiment, the maximum number is the maximum number of cells that can be scheduled by the downlink control information for scheduling the physical uplink shared channels of multiple cells; or, the maximum number is the maximum number of cells that can be scheduled by the downlink control information for scheduling the physical downlink shared channels of multiple cells.

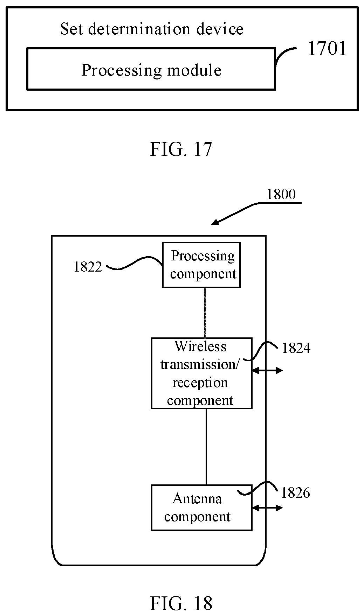

FIG. 17 is a schematic block diagram of a set determination device according to an embodiment of the present disclosure. The set determination device shown in the embodiment can be a network device, or a device composed of modules in a network device, and the network device can communicate with a terminal. The terminal includes, but is not limited to, communication devices such as mobile phones, tablet computers, wearable devices, sensors, and Internet of Things devices. The network device includes, but is not limited to, network devices in 4G, 5G, 6G and other communication systems, such as base stations, core networks, etc.

As shown in FIG. 17, the set determination device includes:
a processing module 1701, configured to determine a cell set to which a first cell belongs, where the sizes of downlink control information for scheduling multiple cells in the cell set are the same.

In one embodiment, the sizes of the downlink control information of the same format for scheduling multiple cells in the cell set are the same.

In one embodiment, different cell sets contain different cells.

In one embodiment, the device further includes a sending module, configured to send indication information to the terminal, where the indication information is configured to indicate the correspondence between cells and cell sets.

In one embodiment, the sending module is configured to send indication information to the terminal in the first cell, where the indication information indicates the ID of the cell set to which the first cell belongs.

In one embodiment, the sending module is configured to send indication information to the terminal in multiple first cells, where the indication information sent in multiple first cells indicates multiple cell groups; the processing module is configured to determine a target cell group to which the first cell belongs in the multiple cell groups, and a cell group set to which the target cell group belongs; and determine a cell set corresponding to the cell group set as the cell set to which the first cell belongs.

In one embodiment, the processing module is further configured to determine at least one cell group set based on the multiple cell groups, where the first cell group in the first cell group set contains the same cell(s) at least as the second cell group in the first cell group set.

In one embodiment, the processing module is configured to determine the cell set composed of the cells contained in the cell group in the cell group set.

In one embodiment, the device further includes a sending module configured to send downlink control information to the terminal in the first cell, where the downlink control information is configured to schedule one or more cells in the cell set to which the first cell belongs.

In one embodiment, the cells in the cell set belong to the same physical uplink control channel group or the same physical uplink control channel cell.

In one embodiment, the number of cells in the cell set is less than or equal to the maximum number of cells that can be scheduled by the downlink control information for scheduling multiple cells; or, the number of cells in the cell set is greater than the maximum number, or less than the maximum number, or equal to the maximum number; or, the number of cells in the cell set is the same as the number of cells contained in the physical uplink control channel group or physical uplink control channel cell corresponding to the downlink control information for scheduling multiple cells.

In one embodiment, the maximum number is the maximum number of cells that can be scheduled by the downlink control information for scheduling the physical uplink shared channels of multiple cells; or, the maximum number is the maximum number of cells that can be scheduled by the downlink control information for scheduling the physical downlink shared channels of multiple cells.

With respect to the apparatus in the above-mentioned embodiment, the specific manner in which each module performs the operation has been described in detail in the embodiment of the relevant method, and will not be described in detail here.

With respect to the apparatus embodiment, since it basically corresponds to the method embodiment, the relevant parts can be referred to the partial description of the method embodiment. The device embodiments described above are merely illustrative, where the modules described as separate components may be physically separated or may not be physically separated, and the components displayed as modules may be physical modules or may not be physical modules, that is, they may be located in one place, or they may be distributed on multiple network modules. Some or all of the modules may be selected according to actual needs to achieve the purpose of the present embodiment. Those skilled in the art may understand and implement the present embodiment without creative work.

The embodiments of the present disclosure also provide a communication device, including a processor; and a memory for storing a computer program; when the computer program is executed by the processor, the set determination method executed by the terminal described in any of the above embodiments is implemented.

The embodiments of the present disclosure also provide a communication device, including a processor; and a memory for storing a computer program; when the computer program is executed by the processor, the set determination method executed by the network device described in any of the above embodiments is implemented.

The embodiments of the present disclosure also provide a computer-readable storage medium for storing a computer program. When the computer program is executed by the processor, the set determination method executed by the terminal described in any of the above embodiments is implemented.

The embodiments of the present disclosure also provide a computer-readable storage medium for storing a computer program. When the computer program is executed by a processor, the set determination method executed by a network device according to any of the above embodiments is implemented.

As shown in FIG. 18, FIG. 18 is a schematic block diagram of a device 1800 for determining a set according to an embodiment of the present disclosure. The device 1800 may be provided as a base station. Referring to FIG. 18, the device 1800 includes a processing component 1822, a wireless transmission/reception component 1824, an antenna component 1826, and a signal processing part specific to a wireless interface. The processing component 1822 may further include one or more processors. One of the processors in the processing component 1822 may be configured to implement the set determination method performed by a network device according to any of the above embodiments.

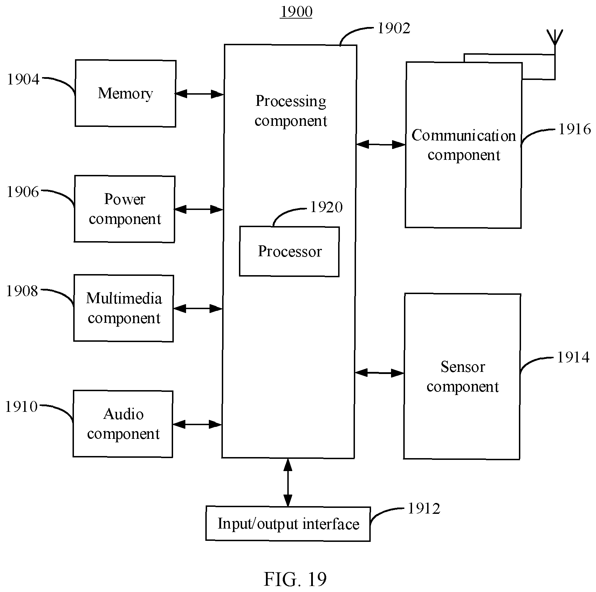

FIG. 19 is a schematic block diagram of a device 1900 for determining a set according to an embodiment of the present disclosure. For example, the device 1900 may be a mobile phone, a computer, a digital broadcast terminal, a messaging device, a game console, a tablet device, a medical device, a fitness device, a personal digital assistant, etc.

Referring to FIG. 19, the device 1900 may include one or more of the following components: a processing component 1902, a memory 1904, a power component 1906, a multimedia component 1908, an audio component 1910, an input/output (I/O) interface 1912, a sensor component 1914, and a communication component 1916.

The processing component 1902 generally controls the overall operation of the device 1900, such as operations associated with display, phone calls, data communications, camera operations, and recording operations. The processing component 1902 may include one or more processors 1920 to execute instructions to complete all or part of the steps of the set determination method performed by the terminal in any of the above embodiments. In addition, the processing component 1902 may include one or more modules to facilitate interaction between the processing component 1902 and other components. For example, the processing component 1902 may include a multimedia module to facilitate interaction between the multimedia component 1908 and the processing component 1902.

The memory 1904 is configured to store various types of data to support operations in the device 1900. Examples of such data include instructions for any application or method operating on the device 1900, contact data, phone book data, messages, pictures, videos, etc. The memory 1904 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 1906 provides power to the various components of the device 1900. The power component 1906 may include a power management system, one or more power supplies, and other components associated with generating, managing and distributing power to the device 1900.

The multimedia component 1908 includes a screen that provides an output interface between the device 1900 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide and gestures on the touch panel. The touch sensor can not only sense the boundary of the touch or slide action, but also detect the duration and pressure associated with the touch or slide operation. In some embodiments, the multimedia component 1908 includes a front camera and/or a rear camera. When the device 1900 is in an operating mode, such as a shooting mode or a video mode, the front camera and/or the rear camera can receive external multimedia data. Each front camera and the rear camera can be a fixed optical lens system or have focal length and optical zoom capabilities.

The audio component 1910 is configured to output and/or input audio signals. For example, the audio component 1910 includes a microphone (MIC), and when the device 1900 is in an operating mode, such as a call mode, a recording mode, and a voice recognition mode, the microphone is configured to receive an external audio signal. The received audio signal can be further stored in the memory 1904 or sent via the communication component 1916. In some embodiments, the audio component 1910 also includes a speaker for outputting an audio signal.

The I/O interface 1912 provides an interface between the processing component 1902 and a peripheral interface module. The peripheral interface module may be a keyboard, a click wheel, a button, etc. The button may include, but is not limited to, a home button, a volume button, a start button, and a lock button.

The sensor component 1914 includes one or more sensors for providing various aspects of the status assessment of the device 1900. For example, the sensor component 1914 can detect the open/closed state of the device 1900, the relative positioning of components, such as the display and keypad of device 1900, the position change of the device 1900 or a component of the device 1900, the presence or absence of user contact with the device 1900, the orientation or acceleration/deceleration of the device 1900, and the temperature change of the device 1900. The sensor component 1914 may include a proximity sensor configured to detect the presence of a nearby object without any physical contact. The sensor component 1914 may also include an optical sensor, such as a CMOS or CCD image sensor, for use in imaging applications. In some embodiments, the sensor component 1914 may also include an acceleration sensor, a gyroscope sensor, a magnetic sensor, a pressure sensor, or a temperature sensor.

The communication component 1916 is configured to facilitate wired or wireless communication between the device 1900 and other devices. The device 1900 may access a wireless network based on a communication standard, such as WiFi, 2G, 3G, 4G LTE, 5G NR, or a combination thereof. In an example embodiment, the communication component 1916 receives a broadcast signal or broadcast-related information from an external broadcast management system via a broadcast channel. In an example embodiment, the communication component 1916 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the device 1900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the set determination method performed by the terminal as described in any of the above embodiments.

In an example embodiment, a non-transitory computer-readable storage medium including instructions is also provided, such as a memory 1904 including instructions, and the instructions may be executed by the processor 1920 of the device 1900 to perform the set determination method performed by the terminal as described in any of the above embodiments. For example, the non-transitory computer-readable storage medium may be a ROM, a random access memory (RAM), a CD-ROM, a magnetic tape, a floppy disk, an optical data storage device, and the like.

Other embodiments of the present disclosure will be readily apparent to those skilled in the art after considering the specification and practicing the disclosure disclosed herein. The present disclosure is intended to cover any variation, use or adaptation of the present disclosure that follows the general principles of the present disclosure and includes common knowledge or customary technical means in the art that are not disclosed in the present disclosure. The description and embodiments are to be regarded as examples only, and the true scope and spirit of the present disclosure are indicated by the following claims.

It should be understood that the present disclosure is not limited to the precise structure described above and shown in the drawings, and various modifications and changes may be made without departing from the scope thereof. The scope of the present disclosure is limited only by the appended claims.

It should be noted that, in this document, relational terms such as first and second, etc. are used only to distinguish one entity or operation from another entity or operation, and do not necessarily require or imply any such actual relationship or order between these entities or operations. The terms "include", "including" or any other variants thereof are intended to cover non-exclusive inclusion, so that a process, method, article or device that includes a series of elements includes not only those elements, but also other elements not explicitly listed, or also includes elements inherent to such process, method, article or device. In the absence of further restrictions, the element defined by the phrase "including a ..." does not exclude the existence of other identical elements in the process, method, article or device including the element.

The above describes in detail the method and device provided in the embodiments of the present disclosure. Specific examples are used herein to illustrate the principles and implementation methods of the present disclosure. The description of the above embodiments is only used to help understand the method and its core idea of the present disclosure. At the same time, for those skilled in the art, according to the idea of the present disclosure, there will be changes in the specific implementation methods and application scope. In summary, the content of this specification should not be understood as limiting the present disclosure.

## Claims

1. A set determination method, performed by a terminal, comprising:
determining a cell set to which a first cell belongs, wherein sizes of downlink control information for scheduling multiple cells in the cell set are same.

2. The method according to claim 1, wherein sizes of the downlink control information of a same format for scheduling multiple cells in the cell set are same.

3. The method according to claim 1, wherein different cell sets contain different cells.

4. The method according to claim 1, wherein determining the cell set to which the first cell belongs comprises:
determining a correspondence between cells and cell sets according to indication information sent by a network device; and
determining the cell set to which the first cell belongs according to the correspondence.

5. The method according to claim 4, wherein determining the correspondence between the cells and the cell sets according to the indication information sent by the network device comprises:
receiving the indication information sent by the network device in the first cell; and
determining an ID of the cell set to which the first cell belongs according to the indication information.

6. The method according to claim 4, wherein determining the correspondence between the cells and the cell sets according to the indication information sent by the network device comprises:
receiving the indication information sent by the network device in the first cell;
determining multiple cell groups according to the indication information received in multiple first cells;
determining a target cell group to which the first cell belongs in the multiple cell groups, and a cell group set to which the target cell group belongs; and
determining a cell set corresponding to the cell group set as the cell set to which the first cell belongs.

7. The method according to claim 6, further comprising:
determining at least one cell group set according to the multiple cell groups, wherein a first cell group in a first cell group set contains one or more same cells at least as a second cell group in the first cell group set.

8. The method according to claim 6, wherein determining the cell set corresponding to the cell group set comprises:
determining a cell set composed of cells contained in the cell groups in the cell group set.

9. The method according to any one of claims 1 to 8, further comprising:
when receiving the downlink control information in the first cell, determining that the downlink control information is configured to schedule one or more cells in the cell set to which the first cell belongs.

10. The method according to any one of claims 1 to 8, wherein the cells in the cell set belong to a same physical uplink control channel group or a same physical uplink control channel cell.

11. The method according to any one of claims 1 to 8, wherein a number of cells in the cell set is less than or equal to a maximum number of cells capable of being scheduled by the downlink control information for scheduling multiple cells; or,
the number of cells in the cell set is greater than the maximum number, or less than the maximum number, or equal to the maximum number; or,
the number of cells in the cell set is the same as a number of cells contained in a physical uplink control channel group or a physical uplink control channel cell corresponding to the downlink control information for scheduling multiple cells.

12. The method according to claim 11, wherein the maximum number is a maximum number of cells capable of being scheduled by the downlink control information for scheduling physical uplink shared channels of multiple cells; or,
the maximum number is a maximum number of cells capable of being scheduled by the downlink control information for scheduling physical downlink shared channels of multiple cells.

13. A set determination method, performed by a network device, comprising:
determining a cell set to which a first cell belongs, wherein sizes of downlink control information for scheduling multiple cells in the cell set are same.

14. The method according to claim 13, wherein sizes of the downlink control information of a same format for scheduling multiple cells in the cell set are same.

15. The method according to claim 13, wherein different cell sets contain different cells.

16. The method according to claim 13, further comprising:
sending indication information to a terminal, wherein the indication information is configured to indicate a correspondence between cells and cell sets.

17. The method according to claim 16, wherein sending the indication information to the terminal comprises:
sending the indication information to the terminal in the first cell, wherein the indication information is configured to indicate an ID of the cell set to which the first cell belongs.

18. The method according to claim 16, wherein sending the indication information to the terminal comprises:
sending the indication information to the terminal in multiple first cells, wherein the indication information sent in multiple first cells is configured to indicate multiple cell groups; and
wherein determining the cell set to which the first cell belongs comprises:
determining a target cell group to which the first cell belongs in the multiple cell groups, and a cell group set to which the target cell group belongs; and
determining a cell set corresponding to the cell group set as the cell set to which the first cell belongs.

19. The method according to claim 18, further comprising:
determining at least one cell group set according to the multiple cell groups, wherein a first cell group in a first cell group set contains one or more same cells at least as a second cell group in the first cell group set.

20. The method according to claim 18, wherein determining the cell set corresponding to the cell group set comprises:
determining a cell set composed of cells contained in the cell groups in the cell group set.

21. The method according to any one of claims 13 to 20, further comprising:
sending the downlink control information to the terminal in the first cell, wherein the downlink control information is configured to schedule one or more cells in the cell set to which the first cell belongs.

22. The method according to any one of claims 13 to 20, wherein the cells in the cell set belong to a same physical uplink control channel group or a same physical uplink control channel cell.

23. The method according to any one of claims 13 to 20, wherein a number of cells in the cell set is less than or equal to a maximum number of cells capable of being scheduled by the downlink control information for scheduling multiple cells; or,
the number of cells in the cell set is greater than the maximum number, or less than the maximum number, or equal to the maximum number; or,
the number of cells in the cell set is the same as a number of cells contained in a physical uplink control channel group or a physical uplink control channel cell corresponding to the downlink control information for scheduling multiple cells.

24. The method according to claim 23, wherein the maximum number is a maximum number of cells capable of being scheduled by the downlink control information for scheduling physical uplink shared channels of multiple cells; or,
the maximum number is a maximum number of cells capable of being scheduled by the downlink control information for scheduling physical downlink shared channels of multiple cells.

25. A set determination device, comprising:
a processing module configured to determine a cell set to which a first cell belongs, wherein sizes of downlink control information for scheduling multiple cells in the cell set are same.

26. A set determination device, comprising:
a processing module configured to determine a cell set to which a first cell belongs, wherein sizes of downlink control information for scheduling multiple cells in the cell set are same.

27. A communication device, comprising:
a processor; and
a memory for storing a computer program;
when the computer program is executed by the processor, the set determination method according to any one of claims 1 to 12 is implemented.

28. A communication device, comprising:
a processor; and
a memory for storing a computer program;
when the computer program is executed by the processor, the set determination method according to any one of claims 13 to 24 is implemented.

29. A computer-readable storage medium, for storing a computer program, wherein when the computer program is executed by the processor, the set determination method according to any one of claims 1 to 12 is implemented.

30. A computer-readable storage medium for storing a computer program, wherein when the computer program is executed by a processor, the set determination method according to any one of claims 13 to 24 is implemented.
